# EUROPEAN PATENT APPLICATION

(11) **EP 4 763 355 A1**
(43) Date of publication of application: **24.06.2026**
(21) Application number: 25217107.9
(22) Date of filing: 19.11.2025
(51) Int. Cl.: B05C 5/02, B05C 9/06, H01M 4/04

(54) **SLOT DIE COATER AND SECONDARY BATTERY ELECTRODE**

(30) Priority: 03.12.2024 KR 20240177426
(71) Applicant: SAMSUNG SDI CO., LTD., Yongin-si, Gyeonggi-do 17084 (KR)
(72) Inventor: AN, Eunjin, 17084 Yongin-Si (KR); KIM, Sanggi, 17084 Yongin-Si (KR); KWAK, Junhyeok, 17084 Yongin-si (KR); KIM, Hyunchul, 17084 Yongin-Si (KR); KIM, Yongsoo, 17084 Yongin-si (KR); HONG, Chan, 17084 Yongin-Si (KR); KIM, Yongin, 17084 Yongin-Si (KR)
(74) Representative: Marks & Clerk LLP

(57) **Abstract**

A slot die coater includes a first die block, a second die block below the first die block, a third die block below the second die block, a first spacer between the first die block and the second die block, the first spacer defining a first slot through which a first slurry is to be discharged, the first spacer including a first base, first and second sub-guides extending from opposite sides of the first base, respectively, in a first slurry discharge direction, and an amount of the first slurry to be discharged from the first slot being determined based on shapes of the first and second sub-guides, and a second spacer between the second die block and the third die block, the second spacer defining a second slot through which a second slurry is to be discharged.

## Description

### BACKGROUND

### 1. Field

The present disclosure relates to slot die coaters and secondary battery electrodes.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to some embodiments of the present disclosure, a slot die coater may include a first die block, a second die block disposed below the first die block, a third die block disposed below the second die block, a first spacer disposed between the first die block and the second die block to form a first slot through which a first slurry is discharged, and a second spacer disposed between the second die block and the third die block to form a second slot through which a second slurry is discharged. The first spacer may include a first base, and first_1 and first_2 guides formed so as to extend from both sides of the first base in a first slurry discharge direction, respectively. Based on shapes of the first_1 and first_2 guides, an amount of the first slurry discharged from the first slot may be determined.

According to an embodiment of the present disclosure, each of the first_1 guide and the first_2 guide may include a first region that is adjacent to the first base and has a constant width, and a second region that is connected to the first region and has a width larger than the width of the first region.

According to an embodiment of the present disclosure, a width of the second region may increase in correspondence with the first slurry discharge direction.

According to an embodiment of the present disclosure, each of the first_1 guide and the first_2 guide may further include a third region that is connected to the second region and has a constant width.

According to an embodiment of the present disclosure, each of the first_1 guide and the first_2 guide may further include a third region that is connected to the second region and has a width that decreases in correspondence with the first slurry discharge direction.

According to an embodiment of the present disclosure, a ratio of a width decrease amount of the third region to a length of the third region may be 1:1.

According to an embodiment of the present disclosure, the second spacer may include a second base, and second_1, second_2, and second_3 guides formed so as to extend from the second base in a second slurry discharge direction.

According to an embodiment of the present disclosure, the second_2 guide may be disposed between the second_1 guide and the second_3 guide, and a width of the second_2 guide may be larger than widths of the second_1 guide and the second_3 guide.

According to an embodiment of the present disclosure, the second_1 guide and the second_3 guide may be formed symmetrically with respect to an imaginary centerline passing through a center of the second spacer.

According to an embodiment of the present disclosure, at least a portion of a first discharge port from which the first slurry is discharged, the first discharge port being formed by the first spacer, and at least a portion of a second discharge port from which the second slurry is discharged, the second discharge port being formed by the second spacer, may overlap each other.

According to an embodiment of the present disclosure, the second slurry may include a water-soluble polymer.

According to an embodiment of the present disclosure, the water-soluble polymer may include carboxy methyl cellulose (CMC).

According to an embodiment of the present disclosure, the first slurry may include an active material, a binder, and a conductive material.

According to an embodiment of the present disclosure, the active material may include a negative electrode active material.

According to an embodiment of the present disclosure, a viscosity of the second slurry may be greater than or equal to a viscosity of the first slurry.

According to some embodiments of the present disclosure, a secondary battery electrode may include a substrate, a composite portion formed by applying onto the substrate the first slurry discharged through the first slot of the slot die coater, and blocking layers formed at both ends of the composite portion by applying onto the substrate the second slurry discharged through the second slot of the slot die coater.

According to an embodiment of the present disclosure, on the substrate, a maximum thickness of the blocking layers may be smaller than a maximum thickness of the composite portion.

According to an embodiment of the present disclosure, the blocking layers may be formed by removing moisture from the second slurry.

According to an embodiment of the present disclosure, a viscosity of the second slurry may be greater than or equal to a viscosity of the first slurry.

According to an embodiment of the present disclosure, the second slurry may include carboxy methyl cellulose (CMC).

According to some embodiments of the present disclosure, a method of forming a secondary battery may include providing a slot die coater including a first die block, a second die block below the first die block, a third die block below the second die block, a first spacer between the first die block and the second die block, and a second spacer between the second die block and the third die block, discharging a first slurry through a first slot formed by the first spacer, the first spacer including a first base, and first and second sub-guides extending from opposite sides of the first base, respectively, in a first slurry discharge direction, and an amount of the first slurry to be discharged from the first slot being determined based on shapes of the first and second sub-guides, and discharging a second slurry through a second slot formed by the second spacer, such that the first slurry and the second slurry are discharged simultaneously.

At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a diagram illustrating an example in which slurry is coated on a substrate through a slot die coater according to an embodiment of the present disclosure.
FIG. 2 is a side view illustrating an example of a slot die coater according to an embodiment of the present disclosure.
FIG. 3 is a perspective view illustrating an example of a slot die coater according to an embodiment of the present disclosure.
FIG. 4 is an exploded perspective view illustrating an example of a slot die coater according to an embodiment of the present disclosure.
FIG. 5 is a diagram illustrating an example of a first spacer according to an embodiment of the present disclosure.
FIGS. 6A and 6B are diagrams of an enlarged portion A of FIG. 5.
FIG. 7 is a diagram illustrating an example of a second spacer according to an embodiment of the present disclosure.
FIG. 8 is a diagram for explaining first and second slots of a slot die coater according to an embodiment of the present disclosure.
FIG. 9 is a diagram for explaining effects of a slot die coater according to an embodiment of the present disclosure.
FIG. 10 is a schematic view illustrating a cross-section of a secondary battery electrode according to an embodiment of the present disclosure.
FIG. 11 is a diagram schematically illustrating a top surface of the secondary battery electrode of FIG. 10.
FIG. 12 is a diagram showing results of measuring thickness of an electrode manufactured by a slot die coater according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical scope, aspects, and features of the present disclosure. Accordingly, it should be understood that there may be various equivalents and modifications that can replace or modify the embodiments described herein at the time of filing this application.

Also, it will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, in the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, etc. may be used herein to describe various elements, these elements should not be limited by these terms. These terms are only used to distinguish one element from another element. Thus, a first element could be termed a second element unless the context clearly indicates otherwise.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked," or "connected" to each other, or another component may be "interposed" between the components. It will also be understood that when an element is referred to as being "electrically coupled" to another element, it may be directly coupled to the other element or intervening elements may be present.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

In this specification, unless it is clearly specified to be singular in context, expressions in the singular encompass plural expressions. In addition, unless it is clearly specified to be plural in context, expressions in the plural include singular expressions. Throughout the specification, when any portion is described as including a certain component, it does not exclude other components, but may further include other components unless there is a specific statement to the contrary.

In the present disclosure, sizes and relative sizes of illustrated regions in the drawings may be exaggerated for clarity of explanation. That is, the sizes shown in the drawings are merely for ease of understanding, and are not limited thereto. Also, the same reference numerals across the entire specification may refer to the same components.

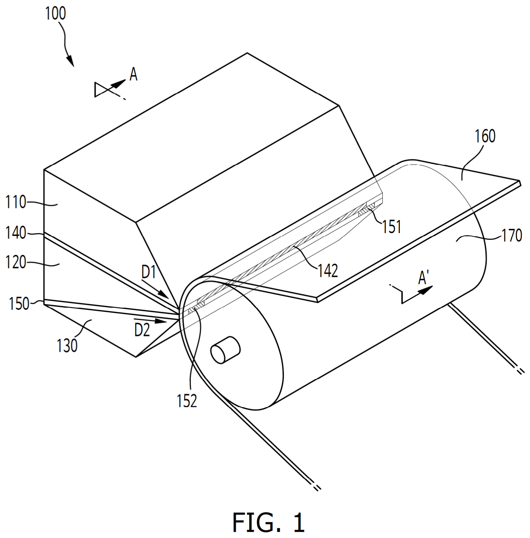

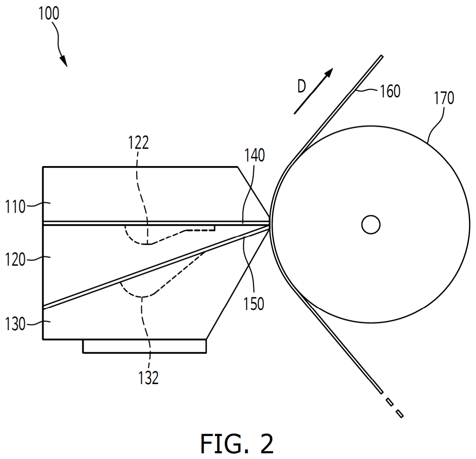

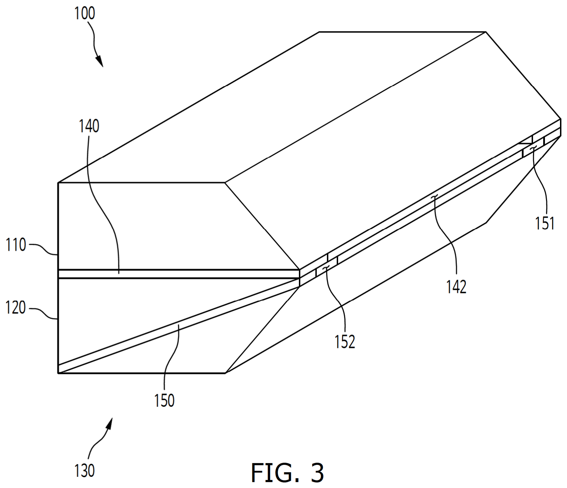

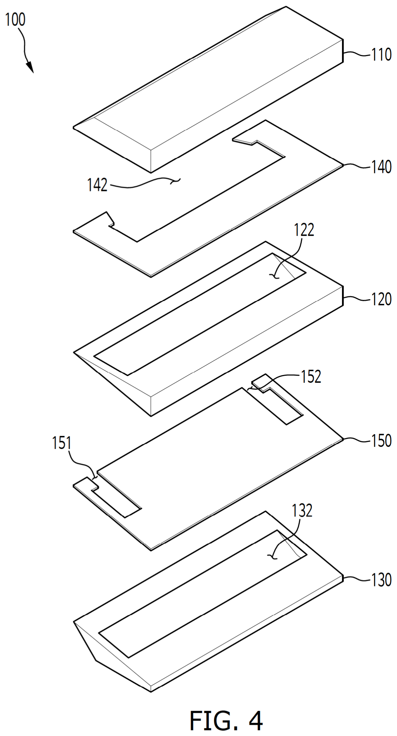

FIG. 1 is a diagram illustrating an example in which slurry is coated on a substrate through a slot die coater according to an embodiment of the present disclosure. FIG. 2 is a side view illustrating an example of a slot die coater according to an embodiment of the present disclosure. FIG. 3 is a perspective view illustrating an example of a slot die coater according to an embodiment of the present disclosure. FIG. 4 is an exploded perspective view illustrating an example of a slot die coater according to an embodiment of the present disclosure.

Referring to FIGS. 1 to 4, a slot die coater 100 may include a first die block 110, a second die block 120 disposed below the first die block 110, and a third die block 130 disposed below the second die block 120 (e.g., the second die block 120 may be between the first die block 110 and the third die block 130). The slot die coater 100 may further include a first spacer 140 disposed between the first die block 110 and the second die block 120 to form a first slot 142 through which a first slurry is discharged, and a second spacer 150 disposed between the second die block 120 and the third die block 130 to form second slots 151, 152 through which a second slurry is discharged. The first slot 142 may refer to a space in which the first slurry is discharged, formed by the first die block 110, the second die block 120, and the first spacer 140. Likewise, the second slots 151, 152 may refer to spaces in which the second slurry is discharged, formed by the second die block 120, the third die block 130, and the second spacer 150. Accordingly, depending on the shape of the first spacer 140, the shape of the first slot 142 may change, and depending on the shape of the first slot 142, a discharge amount, a discharge speed, a discharge angle, or the like of the first slurry may be adjusted. Likewise, depending on the shape of the second spacer 150, the shape of the second slots 151, 152 may change, and depending on the shape of the second slots 151, 152, a discharge amount, a discharge speed, a discharge angle, or the like of the second slurry may be adjusted.

Referring to FIGS. 1 and 2, the slot die coater 100 may be disposed so as to be adjacent to one surface of a substrate 160 that is wound and transferred, so that slurry discharged through the first slot 142 or the second slots 151, 152 may be coated or applied onto the substrate 160. The substrate 160 may be a reel-type metal thin film or metal foil. For example, the substrate 160 may be a substrate constituting an electrode assembly of a secondary battery. For example, copper (Cu) may be used as a negative electrode substrate, and aluminum (Al), nickel (Ni), stainless use steel (SUS), or the like may be used as a positive electrode substrate. The substrate 160 may be continuously transferred by rotation of a roll 170, and slurry discharged through the slot die coater 100 may be coated or applied onto the transferred substrate 160.

At least a portion of each of the first die block 110 and the second die block 120 may be formed in a substantially wedge shape whose thickness gradually decreases in a direction in which the first slurry is discharged. In addition, at least a portion of each of the second die block 120 and the third die block 130 may be formed in a substantially wedge shape whose thickness gradually decreases in a direction in which the second slurry is discharged. However, the die blocks may be formed in various shapes that facilitate coating slurry onto the substrate 160.

Referring to FIG. 1, in an embodiment, the first slot 142 may be formed between the first die block 110 and the second die block 120 so as to be parallel to a first slurry discharge direction D1, and the second slots 151, 152 may be formed between the second die block 120 and the third die block 130 so as to be parallel to a second slurry discharge direction D2 (e.g., the first and second slurry discharge directions D1 and D2 may be configured at an oblique angle with respect to each other). For example, referring to FIGS. 1 and 3, the second slots 151, 152 may include a first sub-slot 151 and a second sub-slot 152 spaced apart from each other along a rotation axis of the roll 170, and edges of the first slot 142 may vertically overlap the first and second sub-slots 151 and 152, respectively. However, the shapes (e.g., directions) of the first slot 142 and the second slots 151, 152 may vary, so if two slots in the slot die coater 100 are brought close to one side, then, based on the cross-section of FIG. 2, each slot may be formed with various inclinations.

In an embodiment, depending on shapes and/or arrangements of the first spacer 140 and the second spacer 150, at least a portion of a first discharge port (i.e., an opening of the first slot 142 from which the first slurry is discharged and which is formed by the first spacer 140) and at least a portion of a second discharge port (i.e., openings of the second slots 151, 152 from which the second slurry is discharged and which is formed by the second spacer 150) may overlap each other. Here, the first discharge port may refer to an edge region from which the first slurry is discharged in the first slot 142, and the second discharge port may refer to an edge region from which the second slurry is discharged in the second slots 151, 152. Thus, when the first slurry and the second slurry are coated or applied onto the substrate 160, an overlapping (overlap) region in which at least a portion of the first slurry and at least a portion of the second slurry overlap may be formed.

Referring to FIG. 2, the second die block 120 may include a first receiving portion 122 that accommodates the first slurry, and the third die block 130 may include a second receiving portion 132 that accommodates the second slurry. In addition, the first slurry accommodated in the first receiving portion 122 may be connected to (e.g., in fluid communication with) the first slot 142, and may be coated or applied onto the substrate 160 through the first slot 142. Similarly, the second slurry accommodated in the second receiving portion 132 may be connected to (e.g., in fluid communication with) the second slots 151, 152, and may be coated or applied onto the substrate 160 through the second slots 151, 152.

The first slurry may be continuously supplied to the first receiving portion 122 through a first flow path. Thus, in the event that the first receiving portion 122 is in a saturated state, the first slurry accommodated in the first receiving portion 122 may flow to the first slot 142. In addition, the second slurry may be continuously supplied to the second receiving portion 132 through a second flow path (not shown). Thus, in the event that the second receiving portion 132 is in a saturated state, the second slurry accommodated in the second receiving portion 132 may flow to the second slots 151, 152. However, the shape of the first receiving portion 122 and the second receiving portion 132 and positions and forms of flow paths connected to the first receiving portion 122 and the second receiving portion 132, shown in FIG. 2, are not limited thereto.

In an embodiment, the first slurry may include electrode active material, conductive material, binder, or the like. In the case of a positive electrode for a lithium secondary battery, the first slurry may include a positive electrode active material, and may further include a binder and/or a conductive material. In the case of a negative electrode, the first slurry may include a negative electrode active material, and may further include a binder and/or a conductive material. Any active material generally used in the field of secondary battery technology may be used as the positive electrode active material or the negative electrode active material.

The binder serves to adhere the electrode active material particles well to one another, and to adhere the electrode active material well to the substrate (or current collector). For example, the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, or the like, but is not limited thereto.

The conductive material may be used to impart conductivity to the electrode. Within a range that does not cause chemical changes in the battery thus configured, one of various electronically conductive materials may be selected and used as the conductive material. For example, the conductive material may include carbon materials such as natural graphite, artificial graphite, carbon black, acetylene black, ketjen black, carbon fiber, and carbon nanotubes; metal materials in powder or fiber form, such as copper, nickel, aluminum, and silver; a conductive polymer such as a polyphenylene derivative; or a mixture thereof.

The second slurry may be fixed by surface tension together with the first slurry on the substrate 160 and may be utilized to play an auxiliary role in forming an initial shape of the first slurry that is discharged onto the substrate 160. In an embodiment, the second slurry may include a water-soluble polymer, e.g., the second slurry may include carboxy methyl cellulose (CMC). For example, the second slurry may include sodium carboxy methyl cellulose (SCMC), calcium carboxy methyl cellulose (CaCMC), ammonium carboxy methyl cellulose (ACMC), or a combination thereof.

In an embodiment, a viscosity of the second slurry may be greater than or equal to a viscosity of the first slurry. Therefore, the second slurry may be fixed by surface tension together with the first slurry on the substrate 160 and be utilized to play an auxiliary role in forming an initial shape of the first slurry that is discharged onto the substrate 160. This may be effective in reducing a sliding phenomenon at edges of the first slurry. The term "sliding phenomenon" may refer to an event in which the first slurry flows off after being coated or applied onto the substrate 160. The sliding phenomenon may frequently occur at edges of the first slurry, and this sliding phenomenon may cause loading imbalance, NP reversal, and the like.

In an embodiment, a viscosity of the second slurry may be about 0% to 20% higher than a viscosity of the first slurry. Thus, the second slurry may be fixed by surface tension together with the first slurry on the substrate 160 and may be effective in improving a sliding phenomenon that occurs at edges of the first slurry.

As described above, by simultaneously discharging the first slurry and the second slurry onto the substrate 160 through the slot die coater 100, at least a portion of the second slurry may overlap with edges of the first slurry. Through this configuration, the sliding phenomenon at the edges that may occur when the first slurry on the substrate 160 is dried may be alleviated, so that the thickness of the secondary battery electrode may be formed to be relatively uniform.

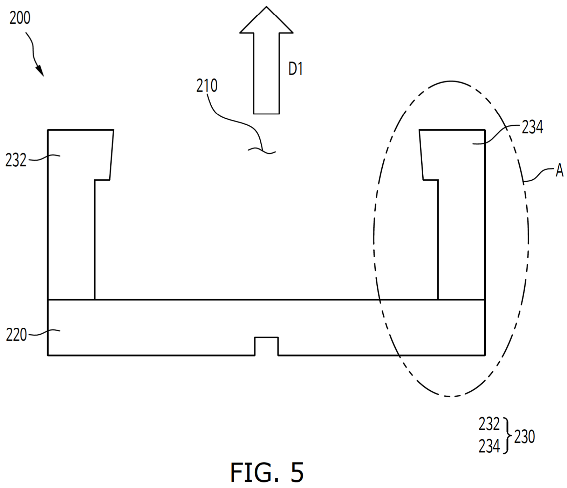

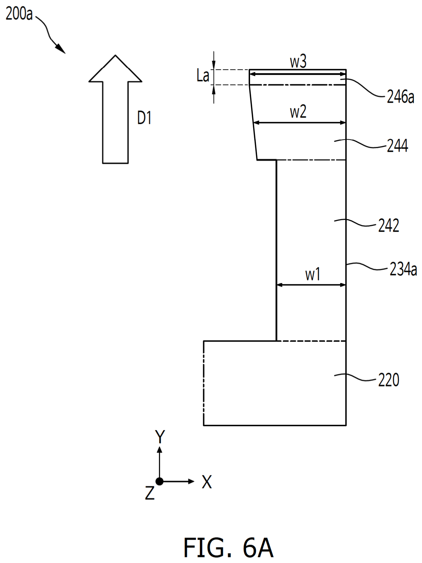

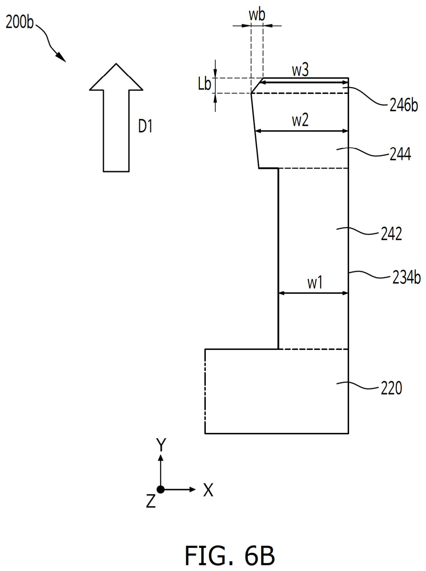

FIG. 5 is a diagram illustrating an example of a first spacer according to an embodiment of the present disclosure. FIGS. 6A and 6B are diagrams illustrating an enlarged portion A of FIG. 5. The first spacer 200 shown in FIG. 5 corresponds to the first spacer 140 shown in FIGS. 1 to 4. The first spacer 200a shown in FIG. 6A corresponds to an enlarged first spacer of FIG. 5 according to an embodiment of the present disclosure, and the first spacer 200b shown in FIG. 6B corresponds to an enlarged first spacer according to another embodiment of the present disclosure.

Referring to FIG. 5, the first spacer 200 may include a first base 220 and a first guide 230. The first guide 230 may include a first sub-guide 232 and a second sub-guide 234. Each of the first sub-guide 232 and the second sub-guide 234 may be formed so as to extend in the first slurry discharge direction D1 from both sides (e.g., opposite sides) of the first base 220. Based on shapes and/or arrangement of the first base 220 and the first guide 230, which are included in the first spacer 200, a shape and/or arrangement of a first slot 210 may be determined. Thus, the discharge amount, discharge speed, discharge angle, or the like of the first slurry discharged from the first slot 210 may be adjusted. The first sub-guide 232 and the second sub-guide 234 may be formed symmetrically with respect to a central line of the first spacer 200. Hereinafter, for ease of explanation, the second sub-guide 234 will be described, and the description of the first sub-guide 232, which is in a symmetrical relationship therewith, will be omitted.

The arrangement and number of the first guide 230 shown in FIG. 5 may be varied. For example, the first guide 230 may include three or more sub-guides (e.g., spaced apart from each other and parallel to each other), and thus, the first guide 230 may be further disposed in regions other than both sides of the first base 220.

Referring to FIG. 6A, a first spacer 200a according to an embodiment of the present disclosure is shown. In an embodiment, the first spacer 200a may include the first base 220 and a second sub-guide 234a formed so as to extend in the first slurry discharge direction D1 from one side of the first base 220.

The second sub-guide 234a may include a first region 242 adjacent to (e.g., directly connected to) the first base 220, a second region 244 that is connected to the first region 242, and a third region 246a that is connected to the second region 244 (e.g., the second region 244 may be between the first region 242 and the third region 246a). Here, a width w1 of the first region 242 may be constant, a width w2 of the second region 244 may increase in correspondence with the first slurry discharge direction D1 (e.g., increase along the Y-axis direction), and a width w3 of the third region 246a may be constant (e.g., the widths w1 through w3 may be measured in the X-axis direction). By adjusting a length La of the third region 246a in the first slurry discharge direction D1, an amount of the first slurry discharged through the first slot 142 may be adjusted. For example, by reducing the length La of the third region 246a, a discharge amount of the first slurry discharged through both edges of the first slot 142 may be increased.

Through this configuration, a discharge amount of the first slurry discharged through both edges of the first slot may be increased. For example, by forming the third region 246a in the second sub-guide 234a, the discharge amount of the first slurry discharged toward both ends of the first slot may increase effectively, and therefore, a sliding phenomenon that may occur at edges of the first slurry may be improved.

Referring to FIG. 6B, a first spacer 200b according to an embodiment of the present disclosure is shown. In an embodiment, the first spacer 200b may include the first base 220 and a second sub-guide 234b formed so as to extend (e.g., lengthwise) in the first slurry discharge direction D1 (e.g., in the Y-axis direction) from one side of the first base 220.

The second sub-guide 234b may include the first region 242 adjacent to the first base 220, the second region 244 connected to the first region 242, and a third region 246b connected to the second region 244. Here, the width w1 of the first region 242 may be constant, the width w2 of the second region 244 may increase in correspondence with the first slurry discharge direction D1, and the width w3 of the third region 246b may decrease in correspondence with the first slurry discharge direction D1. By adjusting a length Lb of the third region 246b in the first slurry discharge direction D1 and/or a width reduction amount wb of the third region 246b, an amount of the first slurry discharged through the first slot 142 may be adjusted. For example, by reducing the length Lb of the third region 246b, a discharge amount of the first slurry discharged through both edges of the first slot 142 may be increased. Or, by reducing the width reduction amount wb of the third region 246b, a discharge amount of the first slurry discharged through both edges of the first slot may be increased.

In an embodiment, a ratio of the width reduction amount wb of the third region to the length Lb of the third region may be 1:1. As a result, the discharge amount of the first slurry discharged through both edges of the first slot may be increased.

Through this configuration, a discharge amount of the first slurry discharged through both edges of the first slot may be increased. For example, by forming the third region 246b in the second sub-guide 234b, the discharge amount of the first slurry discharged toward both edges of the first slot may effectively increase, and thus, a sliding phenomenon that may occur at edges of the first slurry may be improved.

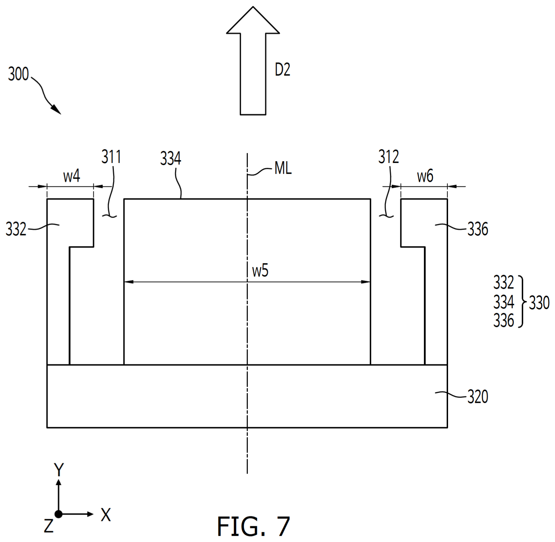

FIG. 7 is a diagram illustrating an example of a second spacer according to an embodiment of the present disclosure. The second spacer 300 shown in FIG. 7 corresponds to the second spacer 150 shown in FIGS. 1 to 4.

Referring to FIG. 7, the second spacer 300 may include a second base 320 and a second guide 330. The second guide 330 may include a first sub-guide 332, a second sub-guide 334, and a third sub-guide 336. Each of the first sub-guide 332, the second sub-guide 334, and the third sub-guide 336 may be formed so as to extend in a second slurry discharge direction D2 from the second base 320. Based on shapes and/or arrangement of the second base 320 and the second guide 330, which are included in the second spacer 300, shapes and/or arrangement of second slots 311, 312 may be determined. Accordingly, a discharge amount, discharge speed, discharge angle, or the like of the second slurry discharged from the second slots 311, 312 may be adjusted.

In an embodiment, the second sub-guide 334 may be disposed between the first sub-guide 332 and the third sub-guide 336. In addition, a width w5 of the second sub-guide may be larger than widths w4 and w6 of the first sub-guide and the third sub-guide, respectively. Through this configuration, at least a portion of the second slurry may overlap edges of the first slurry when the second slurry is discharged onto the substrate 160 (FIG. 1).

In an embodiment, the first sub-guide 332 and the third sub-guide 336 may be formed symmetrically with respect to an imaginary centerline ML passing through a center of the second spacer 300. Therefore, the width w4 of the first sub-guide and the width w6 of the third sub-guide may be the same. As a result, the second slurry may be discharged with the same width on each side and may overlap the edge portion of the first slurry by a uniform width.

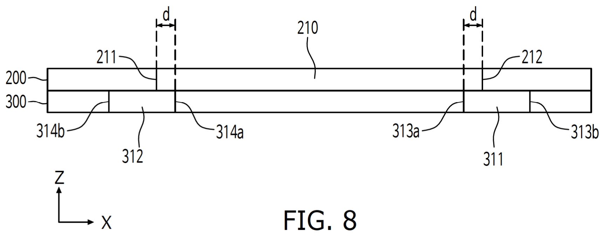

FIG. 8 is a diagram for explaining a first slot and a second slot of a slot die coater according to an embodiment of the present disclosure. FIG. 8 is an example of a view of the slot die coater 100 of FIG. 2 seen from the right side.

Referring to FIG. 8, the first spacer 200 may include the first slot 210, and the second spacer 300 may include the second slots 311, 312. For example, the second slots 311, 312 may be spaced apart from each other along the width of the first slot 210 (e.g., along the X-axis direction).

According to an embodiment, both end portions 211, 212 of the first slot 210 (e.g., opposite end portions of the first slot 210 in the X-axis direction) may be disposed so as to be spaced inward from outer end portions 313b, 314b of the second slots 311, 312, respectively. For example, both end portions 211, 212 of the first slot 210 may be positioned so as to be spaced apart in the X-axis direction from the outer end portions 313b, 314b, respectively, of the second slots 311, 312, respectively.

According to an embodiment, both end portions 211, 212 of the first slot 210 may be disposed so as to be spaced outward by a predetermined distance "d" from inner end portions 313a, 314a, respectively, of the second slots 311, 312, respectively. For example, both end portions 211, 212 of the first slot 210 may be positioned so as to be spaced in the X-axis direction by a predetermined distance "d" from the inner end portions 313a, 314a, respectively, of the second slots 311, 312, respectively.

Through this configuration, at least a portion of a first discharge port, from which the first slurry is discharged and which is formed by the first spacer 200, and at least a portion of a second discharge port, from which the second slurry is discharged and which is formed by the second spacer 300, may overlap each other. For example, referring to FIG. 8, outer edges of the first slot 210 may vertically overlap (in the Y-axis direction) respective inner edges of the second slots 311, 312, so outer edges of the second slots 311, 312 may extend beyond the first slot 210 in the X-axis direction. Thus, the second slurry may block flow at both edges of the first slurry, and a sliding phenomenon that may occur at edges of the first slurry may be improved.

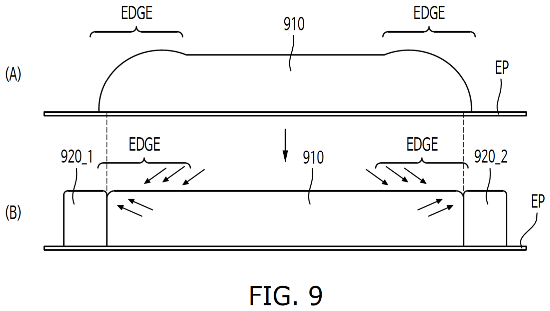

FIG. 9 is a diagram for explaining effects of a slot die coater according to an embodiment of the present disclosure. Referring to FIG. 9, a cross-section of a secondary battery electrode according to an embodiment of the present disclosure is shown. Hereinafter, the secondary battery electrode may be manufactured by the slot die coater 100 described with reference to FIGS. 1-8.

In an embodiment, the secondary battery electrode may include a substrate EP, a composite portion 910, and blocking layers 920_1, 920_2. The substrate EP may correspond to the substrate 160 shown in FIGS. 1 to 4. The composite portion 910 may be formed by applying onto the substrate EP the first slurry discharged through the first slot 210 of the slot die coater 100 (FIG. 1). A width of the composite portion 910 may correspond to a width of the first discharge port connected to the first slot (e.g., the width of an opening of the first slot 142 in the X-axis direction in FIG. 8). That is, a distance between the first sub-guide 232 and the second sub-guide 234 (e.g., a distance between the third regions of the first sub-guide 232 and the second sub-guide 234), which extend from the first base 220 of the first spacer, may correspond to the width of the composite portion 910.

An edge of the composite portion may be a region in which a sliding phenomenon readily occurs in the first slurry applied onto the substrate EP. In this case, a thickness or a loading amount at the edge of the composite portion may be less than a thickness or a loading amount in a central portion among the regions where the first slurry is applied. In this specification, the central portion may refer to a region other than the edge. A deviation in thickness or loading amount at edges of the composite portion may lead to a deterioration in quality of the secondary battery electrode.

In particular, when the first slurry is a negative electrode compound slurry, if the loading amount of the applied negative electrode composite is less than a design value, an NP reversal phenomenon may occur in which an N/P ratio is less than 1, and during charging and discharging of the lithium secondary battery, lithium ions may not be fully accommodated in the negative electrode composite but instead be deposited (plated) as lithium metal. The N/P ratio may mean a value obtained by dividing the capacity (mAh/g) of the negative electrode active material by the capacity of the positive electrode active material. As lithium deposition continues with repeated charging and discharging of the lithium secondary battery, lithium dendrites may grow on the negative electrode to contact the positive electrode, resulting in a possibility of short-circuit and fire.

In an electrode manufactured by using the slot die coater according to some embodiments of the present disclosure, the sliding phenomenon at edges of the composite portion may be reduced, thus reducing the above-described deterioration in electrode quality and/or the possibility of short-circuit or fire of the secondary battery.

Referring to FIG. 9 (part A), by using the slot die coater according to an embodiment of the present disclosure, a loading amount of a composite at edges of the composite portion may be increased. For example, by including a third region in the first spacer, the discharge amount of the first slurry discharged through both edges of the first slot may be increased, thereby increasing the loading amount of the composite at edges of the composite portion. Hereinafter, the first slurry is referred to as the compound slurry, and the second slurry is referred to as the blocking-layer slurry.

In addition, referring to FIG. 9 (part B), if the blocking layers 920_1, 920_2 are formed so as to overlap at least a portion of the edges, it is possible to compensate for protrusions of the composite or for slanted shapes at both ends that may occur due to an increased loading amount of the composite at edges. Specifically, immediately after applying the compound slurry and the blocking-layer slurry onto the substrate EP, the composite may flow in the direction of the blocking layer while the blocking layers 920_1, 920_2 are formed by surface tension between the blocking-layer slurry and the compound slurry. For example, a protruding portion of the composite at the edges may generally flow downward, and at the same time, due to surface tension by the blocking layers 920_1, 920_2, the composite that occupied the protruding portion of the composite portion 910 may flow generally in a direction toward the blocking layers. Consequently, a thickness deviation between a central portion and edges of the composite portion may be reduced, improving electrode quality and reducing the risk of short-circuit or fire of the secondary battery caused by insufficient negative electrode composite loading.

In an embodiment, the blocking layers 920_1, 920_2 may be formed at both ends of the composite portion 910 by applying onto the substrate EP a blocking-layer slurry discharged through the second slot of the slot die coater. The blocking-layer slurry may be fixed by surface tension on the substrate EP together with the compound slurry, and may be utilized to play an auxiliary role in forming an initial shape of the compound slurry that is discharged onto the substrate EP. In an embodiment, the blocking-layer slurry may include a water-soluble polymer, e.g., the blocking-layer slurry may include carboxy methyl cellulose (CMC). For example, the blocking-layer slurry may include sodium carboxy methyl cellulose (SCMC), calcium carboxy methyl cellulose (CaCMC), ammonium carboxy methyl cellulose (ACMC), or a combination thereof.

In an embodiment, a viscosity of the blocking-layer slurry may be greater than or equal to a viscosity of the compound slurry. Accordingly, the blocking-layer slurry may be fixed by surface tension on the substrate EP together with the compound slurry, and may be utilized to play an auxiliary role in forming an initial shape of the compound slurry discharged onto the substrate EP.

In an embodiment, a viscosity of the blocking-layer slurry may be about 0% to 20% higher than the viscosity of the compound slurry. Thus, the blocking-layer slurry may be fixed by surface tension on the substrate EP together with the compound slurry, and may be effective in improving a sliding phenomenon occurring at edges of the compound slurry.

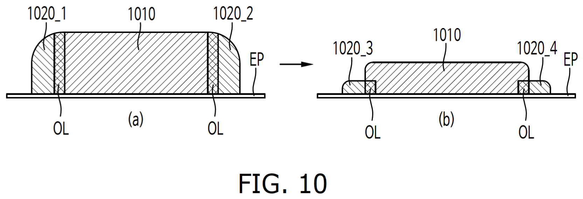

FIG. 10 is a schematic view illustrating a cross-section of a secondary battery electrode according to an embodiment of the present disclosure. Descriptions overlapping with those set forth with reference to FIG. 9 will focus on different points. Hereinafter, the secondary battery electrode may be manufactured by the above-described slot die coater.

For example, in an embodiment of the secondary battery electrode, an overlap region OL may be formed in which at least a portion of blocking layers 1020_1 to 1020_4 and a composite portion 1010 overlap. The overlap region OL may be a region in which the blocking-layer slurry and the compound slurry are mixed. In another example, the overlap region OL may be a region from which water is removed in a mixture of the blocking-layer slurry and the compound slurry. For example, a maximum width of the overlap region OL may be about 20% to 50% of a maximum width of any one of the blocking layers 1020_1 to 1020_4. If the maximum width of the overlap region OL is within the above range, performance of the blocking layers may be exhibited effectively.

In an embodiment, on the substrate EP, a maximum thickness of the blocking layers 1020_1 to 1020_4 may be the same as or smaller than a maximum thickness of the composite portion 1010. Referring to FIG. 10, in electrode (a) before drying, after coating is performed by using the slot die coater, the maximum thickness of the blocking layers 1020_1, 1020_2 may be the same as or smaller than the maximum thickness of the composite portion 1010. In electrode (b), after drying is performed following coating by using the slot die coater, the maximum thickness of the blocking layers 1020_3, 1020_4 may be smaller than the maximum thickness of the composite portion 1010. The blocking layers 1020_1 to 1020_4 may be formed by removing moisture from the blocking-layer slurry applied onto the substrate EP via an electrode drying process.

In addition, in an embodiment, in electrode (a) before drying, after coating is performed by using the slot die coater, a thickness of the composite portion 1010 may be larger than a thickness of the composite portion 1010 in electrode (b) after drying is performed following coating by using the slot die coater.

In an embodiment, in electrode (a) before drying, after coating is performed by using the slot die coater, a thickness of the blocking layers 1020_1, 1020_2 may be about 0% to 20% of the thickness of the composite portion 1010. In electrode (b) after drying is performed following coating by using the slot die coater, a thickness of the blocking layers 1020_3, 1020_4 may be about 0% to 1.5% relative to the thickness of the composite portion 1010.

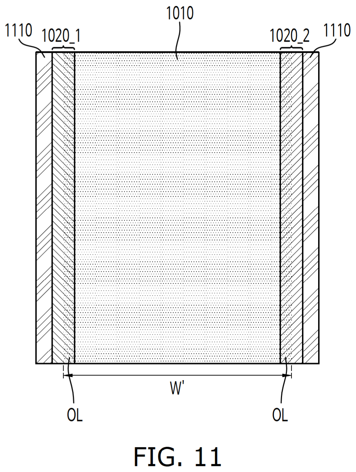

FIG. 11 is a diagram schematically illustrating a top surface of the secondary battery electrode of electrode (b) in FIG. 10. Hereinafter, the secondary battery electrode may be manufactured by the above-described slot die coater, and FIG. 11 is a diagram explaining positions of the blocking layers formed by removal of water from the blocking-layer slurry through a drying process.

In an embodiment, the secondary battery electrode may include the composite portion 1010, blocking layers 1020_1, 1020_2, and an uncoated region 1110. The uncoated region 1110 may refer to a region in which no material is applied onto the substrate. For example, the uncoated region 1110 may be a region other than the region on the substrate in which the blocking layers 1020_1, 1020_2 and/or the composite portion 1010 are disposed. The uncoated region 1110 may be processed into an electrode tab of the secondary battery or may be electrically connected to a separate electrode tab. Here, the electrode tab may serve as a current collector that connects to a terminal of the secondary battery.

In an embodiment, at least a portion of the composite portion 1010, which is formed by applying the compound slurry discharged from the first slot (for example, 142 of FIG. 1) of the slot die coater, and at least a portion of the blocking layers 1020_1, 1020_2, which are formed by applying the blocking-layer slurry discharged from the second slot (for example, 151, 152 of FIG. 1) of the slot die coater, may overlap, forming an overlap region OL.

In an embodiment, a width W' of the composite portion may correspond to a width of the first discharge port connected to the first slot. That is, the distance between the first sub-guide and the second sub-guide, which extend from the first base of the first spacer, may correspond to W', the width of the composite portion.

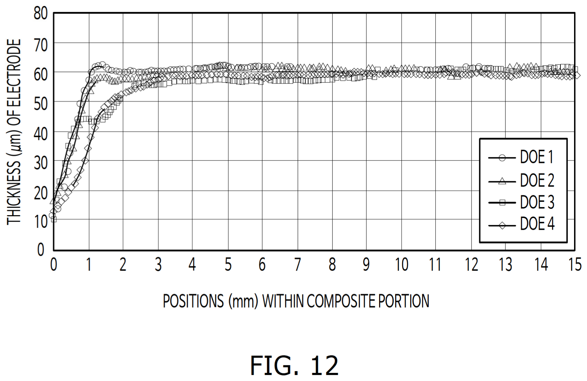

FIG. 12 is a diagram showing results of measuring thickness of an electrode manufactured by a slot die coater according to an embodiment of the present disclosure. FIG. 12 is a graph showing results of measuring thickness of a secondary battery electrode according to positions within the composite portion. An X-axis of the graph indicates positions (mm) within the composite portion, and a Y-axis indicates thickness (µm) of the electrode. Here, the position within the composite portion indicates a length from one end of the edge of the composite portion, and the thickness of the electrode indicates the total thickness of the substrate and the composite portion. In addition, among positions within the composite portion, only part of the central portion of the composite portion is shown.

In the graph shown in FIG. 12, experimental values for thickness of secondary battery electrodes manufactured by varying the shape of the first spacer are shown. Specifically, experimental values for thickness of secondary battery electrodes manufactured by setting different ratios of width reduction of the third region and length of the third region relative to the total width of the composite portion are shown. Here, the width of the composite portion may refer to the coating width of the first slurry (or composite portion) discharged through the first spacer. Alternatively, the width of the composite portion may refer to the shortest distance between the first sub-guide and the second sub-guide of the first spacer. In a first example (DOE 1), the ratio of the width reduction of the third region to the composite portion width is 0, and the ratio of the third region length to the composite portion width is 0.37. In a second example (DOE 2), the ratio of the width reduction of the third region to the composite portion width is 0.37, and the ratio of the third region length to the composite portion width is 0.37. In a third example (DOE 3), those ratios are 1.47 and 2.94, respectively. In a fourth example (DOE 4), those ratios are 0.74 and 0.74, respectively. In the above explanation, these ratios may be interpreted as relative values. They may not simply be the result of dividing, but may be values scaled by a certain factor (for example, 10 or 100).

Referring to the first to fourth examples, in the first example, where each ratio of the width reduction of the third region and the length of the third region relative to the composite portion width is the smallest, it may be confirmed that flow in the edge region of the composite portion is the greatest. Consequently, it may be confirmed that the smaller each of those ratios becomes, the higher the discharge amount of the compound slurry discharged through both edges of the first slot, and the more effectively a sliding phenomenon that may occur at the edges of the composite portion may be improved.

Also, referring to the first example and to the second example, it may be confirmed that, whether the width of the third region is constant (that is, the first example, in which the width reduction ratio of the third region to the composite portion width is 0) or whether the width of the third region decreases (that is, the second example, in which the width reduction ratio of the third region to the composite portion width is 0.37), a large amount of slurry flow occurs at the edge of the composite portion in both cases. Therefore, it may be confirmed that, depending on shapes of the third region according to various embodiments of the present disclosure, the discharge amount of the compound slurry discharged through both edges of the first slot may be increased.

The example embodiments of the present disclosure described above are disclosed by way of example, and those skilled in the art may implement various modifications, changes, and additions without departing from the scope of the present disclosure, and such modifications, changes, and additions should be construed as falling within the scope of the appended claims.

Those skilled in the art will appreciate that various substitutions, alterations, and modifications may be made without departing from the technical scope of the present disclosure, and the present disclosure is therefore not limited by the aforementioned embodiments or by the accompanying drawings.

By way of summation and review, an electrode plate of a secondary battery may be manufactured by coating an electrode compound slurry on a surface of a substrate by using a slot die coater. In this instance, a sliding phenomenon may occur at both ends of the electrode plate in which the thickness of a composite layer gradually decreases at each end of the coated electrode plate. This may cause a loading imbalance in which the thicknesses of the composite layer at both ends of the electrode plate differ. Such a loading imbalance may decrease the safety and performance of the secondary battery.

In contrast, the present disclosure provides a slot die coater and a secondary battery electrode with enhanced safety of a coated secondary battery electrode. According to various embodiments of the present disclosure, a slot die coater may be provided that reduces loading deviations by increasing the flow rate of compound slurry on both ends of a secondary battery electrode.

According to various embodiments of the present disclosure, by blocking flows at both ends of the compound slurry via blocking-layer slurry positioned at both ends of the compound slurry, it may be possible to suppress a sliding phenomenon, thereby preventing short-circuit risk caused by lithium deposition and enhancing the safety of a secondary battery.

According to various embodiments of the present disclosure, by adjusting a shape of the space through which the compound slurry is discharged, an outflow amount of the slurry at edges of the composite portion may increase, and a sliding phenomenon that may occur at the edges of the composite portion may be effectively improved.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A slot die coater (100), comprising:
a first die block (110);
a second die block (120) below the first die block (110);
a third die block (130) below the second die block (120);
a first spacer (140) between the first die block (110) and the second die block (120), the first spacer (140) defining a first slot (142) through which a first slurry is to be discharged, the first spacer (140) including a first base (220), first and second sub-guides (232, 234) extending from opposite sides of the first base (220), respectively, in a first slurry discharge direction (D1), and an amount of the first slurry to be discharged from the first slot (142) being determined based on shapes of the first and second sub-guides (232, 234); and
a second spacer (150) between the second die block (120) and the third die block (130), the second spacer (150) defining a second slot (151, 152) through which a second slurry is to be discharged.

2. The slot die coater (100) according to claim 1, wherein each of the first and second sub-guides (232, 234) includes a first region (242) adjacent to the first base (220) and having a constant width, and a second region (244) that is connected to the first region (242) and having a width larger than the width of the first region (242).

3. The slot die coater (100) according to claim 2, wherein the width of the second region (244) increases in correspondence with the first slurry discharge direction (D1).

4. The slot die coater (100) according to claim 2 or 3, wherein each of the first and second sub-guides (232, 234) further includes a third region (246a) connected to the second region (244) and having a constant width.

5. The slot die coater (100) according to claim 2 or 3, wherein each of the first and second sub-guides (232, 234) further includes a third region (246b) that is connected to the second region (244) and having a width decreasing in correspondence with the first slurry discharge direction (D1).

6. The slot die coater (100) according to claim 5, wherein a ratio of a width decrease amount (wb) of the third region (246b) to a length (Lb) of the third region (246b) is 1:1.

7. The slot die coater (100) according to any preceding claim, wherein the second spacer (300) includes a second base (320) and first through third sub-guides (332, 334, 336) extending from the second base (320) in a second slurry discharge direction (D2).

8. The slot die coater (100) according to claim 7, wherein, with regard to the second spacer (300), the second sub-guide (334) is between the first sub-guide (332) and the third sub-guide (336), a width (w5) of the second sub-guide (334) being larger than a width (w4, w6) of each of the first sub-guide (332) and the third sub-guide (336).

9. The slot die coater (100) according to claim 7 or 8, wherein, with regard to the second spacer (300), the first sub-guide (332) and the third sub-guide (336) are symmetrical with respect to an imaginary centerline (ML) passing through a center of the second spacer (300).

10. The slot die coater (100) according to any preceding claim, wherein at least a portion of a first discharge port at an opening of the first slot (142) and at least a portion of a second discharge port at an opening of the second slot (151, 152) overlap each other.

11. The slot die coater (100) according to any preceding claim and the second slurry, wherein the second slurry includes a water-soluble polymer.

12. The slot die coater (100) according to claim 11, wherein the water-soluble polymer includes carboxy methyl cellulose.

13. The slot die coater (100) according to any preceding claim and the first slurry, wherein the first slurry includes an active material, a binder, and a conductive material.

14. The slot die coater (100) according to claim 13, wherein the active material includes a negative electrode active material.

15. The slot die coater (100) according to any preceding claim and the first slurry and the second slurry, wherein a viscosity of the second slurry is greater than or equal to a viscosity of the first slurry.
